# EUROPÄISCHE PATENTSCHRIFT

(11) **EP 2 026 433 B1**
(45) Veröffentlichungstag und Bekanntmachung des Hinweises auf die Patenterteilung: **17.07.2013**
(21) Anmeldenummer: 08012277.3
(22) Anmeldetag: 08.07.2008
(51) Int. Cl.: H02G 1/12

(54) **Zange zum Abisolieren eines Kabels**
Pincers for isolating a cable
Pince destinée à dénuder un câble

(30) Priorität: 16.08.2007 DE 102007038626
(43) Veröffentlichungstag der Anmeldung: 18.02.2009
(73) Patentinhaber: Wezag GmbH Werkzeugfabrik, 35260 Stadtallendorf (DE)
(72) Erfinder: Battenfeld, Kurt, 35085 Ebsdorfergrund/Wittelsberg (DE)
(74) Vertreter: Rehberg Hüppe + Partner

(56) Entgegenhaltungen:
- DE-A1- 2 019 959
- DE-C1- 4 420 050
- GB-A- 2 288 695
- US-A- 3 822 470
- US-A- 4 730 391
- US-A1- 2002 056 309

## Beschreibung

Die Erfindung betrifft eine Zange zum Abisolieren eines elektrischen Kabels mit rundem Querschnitt, insbesondere zur Bearbeitung eines Koaxialkabels.

### TECHNISCHES GEBIET DER ERFINDUNG

Unter einem "Kabel" wird im Sinne der vorliegenden Erfindung ein ein- oder mehradriger elektrisch leitendes Element verstanden, wobei das Kabel zumindest eine Schicht, insbesondere einen Leiter, eine Ader und/oder eine Isolierung, aufweist, die rotationssymmetrisch zu einer Längsachse des Kabels ausgebildet ist. Ebenfalls möglich ist die Ausbildung einer Schicht als hohlzylinderförmiges leitendes Element oder als im Querschnitt regelmäßiges oder unregelmäßiges kreisringförmiges Kabelgeflecht. Der Begriff "Kabel" umfasst auch Drähte, Litzen, biegbare Leiter sowie Kabel selbst.

Als beispielhaften Anwendungsfall für eine erfindungsgemäße Zange ist die Bearbeitung eines Koaxialkabels zu nennen. Koaxialkabel bestehen aus einem metallischen Innenleiter, beispielsweise einem Kupferkabel, der mit einer Isolationsschicht aus Kunststoff (Dielektrikum) umgeben ist. Unter Zwischenschaltung einer Folie aus Aluminium, deren Schichtdicke wenige µm betragen kann, ist die Isolationsschicht aus Kunststoff von einem Drahtgeflecht umgeben, welches eine Abschirmung bilden kann oder einen zweiten Leiter in dem Koaxialkabel. Das Drahtgeflecht ist wiederum mit einer Isolationsschicht aus Kunststoff umgeben. Beispielhafte derartige Koaxialkabel werden unter den Bezeichnungen RTK 031, RG 174, RG 58, RG 59 oder RG 163 vertrieben. Ein möglicher Anwendungszweck derartiger Koaxialkabel ist der Kraftfahrzeugbau, hier insbesondere als Antennenkabel. Weiteren Einsatz finden Koaxialkabel für die Haustechnik, Hörfunk- und Fernsehanlagen oder die IT-Technik oder Datenübertragung. Für den Einsatz müssen die Enden von Koaxialkabeln unmittelbar mit den zugeordneten Geräten oder unter Zwischenschaltung von Steckern verbunden werden. Hierzu sind die einzelnen Schichten des Koaxialkabels in unterschiedlichen Längen freizulegen. Bei dem Freilegen einer Schicht muss die darüber liegende Schicht vollständig freigelegt werden, so dass diese leicht entfernt werden kann, ohne dass Rückstände verbleiben. Andererseits muss dafür Sorge getragen werden, dass die freigelegte Schicht nicht beschädigt wird, da dies die Funktion des Kabels, beispielsweise eine Isolierung oder Abschirmung, beeinträchtigen könnte.

Neben dem genannten Beispiel eines Koaxialkabels kann die erfindungsgemäße Zange für beliebige Kabel eingesetzt werden, bei denen zumindest eine Schicht oder ein Leiter einen kreisförmige Innen- oder Außenquerschnitt besitzt.

### STAND DER TECHNIK

Bekannt sind Einrichtungen, die speziell und ausschließlich einem Abisolieren eines Kabels dienen:

GB 2 215 143 A offenbart ein Abisoliergerät, mit dem Kabel unterschiedlicher Durchmesser abisoliert werden können. Das Abisoliergerät besitzt eine taschenartige Gehäusehälfte, in der zwei durch die taschenartige Gehäusehälfte hindurchgehende Aufnahmebohrungen für ein Kabel vorgesehen sind. Eine zweite Gehäusehälfte besitzt ein Schneidelement, welches in eine Längsrichtung in die erste Gehäusehälfte einschiebbar ist. Dieses Einschieben erfolgt unter Unterstützung durch ein Federelement, hier ein beide Gehäusehälften umschließendes elastisches Band. In der maximal eingeschobenen Endstellung erstreckt sich das Schneidelement vollständig über eine erste Aufnahmebohrung, so dass mittels der ersten Aufnahmebohrung ein Kabel "guillotinenartig" glatt durchtrennt werden kann. Wird hingegen in der zweiten Aufnahmebohrung ein Kabel angeordnet, wird dieses mit dem federbeaufschlagten Einschieben des Schneidelementes in die taschenartige Gehäusehälfte zwischen einer Anlagefläche der taschenartigen Gehäusehälfte und einer Anlagefläche des anderen Gehäuseteiles benachbart dem Schneidelement eingespannt. Da das Schneidelement über die benachbarte Anschlagfläche in Richtung der gegenüber liegenden Anschlagfläche geringfügig übersteht, schneidet das Schneidelement in Folge der Federbeaufschlagung das Kabel bzw. die Isolierung des Kabels um das überstehende Maß ein. Wird das Abisoliergerät um die Längsachse des Kabels um dieses verdreht, kann ein Umfangsschnitt in die Isolierung des Kabels eingebracht werden. Anschließend kann das Schneidelement entgegen der Federbeaufschlagung zumindest teilweise aus der taschenartigen Gehäusehälfte bewegt werden, wodurch die Aufnahmeöffnungen freigegeben werden und das Kabel aus der Aufnahmeöffnung entfernt werden kann. Eine Entfernung der abgeschnittenen Isolierung erfolgt dann außerhalb des Abisoliergerätes. GB 2 215 143 A liegt weiterhin die Erkenntnis zugrunde, dass in Folge der Reibung zwischen den Anlageflächen und dem Schneidelement mit einer relativen Verdrehung zwischen Abisoliergerät und Kabel das Kabel eine gegenüber der Verschieberichtung dezentrale Lage in der Aufnahmeöffnung einnimmt. Ist die Schneide des Schneidelementes gegenüber der benachbarten Anlagefläche unter einem spitzen Winkel geneigt, kann diese dezentrale Anordnung dazu führen, dass sich für unterschiedliche Drehrichtungen des Abisoliergerätes gegenüber dem Kabel unterschiedliche Schnitttiefen ergeben. Weiterhin kann die auftretende Reibung und die sich einstellende dezentrale Lage des Kabels dazu genutzt werden, dass sich für Kabel unterschiedlicher Durchmesser automatisiert eine unterschiedliche Einschnitttiefe ergibt.

Eine GB 2 215 143 A entsprechende Ausführungsform, bei der allerdings die Gehäusehälften nicht translatorisch zueinander verschiebbar abgeordnet sind, sondern um eine Schwenkachse zueinander verschwenkt werden können, zeigt DE 195 43 390 C1.

GB 2 173 958 A offenbart ein Abisoliergerät, bei dem ein Schneidelement verschwenkbar um eine Schwenkachse gelagert ist. Ein Kabel kann in eine parallel zur Schwenkachse orientierte Aufnahmebohrung eingesteckt werden. Über ein Federelement wird das Schneidelement in Richtung des Kabels beaufschlagt, so dass dieses mit einer hierdurch verursachten Verschwenkung in eine Isolationsschicht des Kabels eindringt. Die Eindringtiefe des Schneidelementes in das Kabel ist vorgegeben durch einen Anschlag für die Verschwenkung des Schneidelementes um die Schwenkachse. Der Anschlag ist mit einem Nocken gebildet, der manuell verdrehbar ist und drei Vorzugsstellungen besitzt, die drei unterschiedliche Einschnitttiefen für das Schneidelement in ein Kabel vorgeben. Umfangsschnitte werden erzeugt durch Drehung des gesamten Abisoliergerätes um das Kabel.

Aus DE 698 31 996 T2 ist ein Abisoliergerät bekannt, bei dem die Schnitttiefe dadurch einstellbar ist, dass über eine Einstelleinrichtung ein gegenüber einer Längskante des Schneidelementes vor- und zurückbewegliches Teil ein größerer oder kleinerer Bereich der Schneide freigebbar ist. Für diese Ausführungsform hängt eine Schnittkraft von der gespeicherten Energie in einer Feder ab, die die Schneide des Schneidelementes gegen das Kabel drückt. Hierbei ist gemäß DE 698 31 996 T2 die Effektivität der Federkraft zur Erzeugung eines Umfangsschnittes abhängig von einer Rotationsbewegung zwischen Schneidelement und Kabel. Eine Beeinflussung einer Schnitttiefe kann somit über den relativen Drehwinkel zwischen Schneidelement und Kabel erfolgen.

DE OS 1 941 188 offenbart eine Zange mit zwei Zangenhälften zum Abisolieren von Koaxialkabeln. Die Zangenhälften besitzen jeweils eine halbzylinderförmige Ausnehmung, die sich für geschlossene Zangenhälften zu einer zylinderförmigen Aufnahme für ein Koaxialkabel ergänzen. In den Ausnehmungen sind in Querschlitzen axial hintereinander liegend drei Messer angeordnet, deren Schneiden geradlinig ausgebildet sind und unterschiedlich tief in die Ausnehmung hineinragen. Alternativ können die Schneiden halbkreisförmig, V-förmig oder anders geschliffen sein. Ein Anschlag dient der Vorgabe der relativen Lage der Stirnseite eines in die Zange eingelegten Koaxialkabels zu den Messern. Durch ein derartiges Abisoliergerät soll ein gleichzeitiges, mehrstufiges Abisolieren eines Koaxialkabels ermöglicht werden.

Schließlich offenbart DE 91 04 414 U1 eine multifunktionale Zange die einerseits zum Abisolieren von abgeschirmten Koaxialkabeln dient. Die Handhebel der Zange sind auf der den Handhebeln gegenüber liegenden Seite der Schwenkachse der Zange starr mit Hälften eines Schneidkopfes verbunden, die mit einem Schließen der Handhebel aufeinander zu geschwenkt werden. Beide Hälften besitzen jeweils zwei parallel zueinander orientierte halbzylinderförmige Ausnehmungen, die sich für geschlossene Handhebel und geschlossenen Zangenkopf zu zwei zylinderförmigen Ausnehmungen ergänzen, in die ein Kabel eingeführt sein kann. In die halbzylinderförmigen Ausnehmungen ragen Schneidelemente hinein mit einer Schneide, die sich in einer Querebene der Ausnehmung erstreckt. Die Schneide sind hierbei ungefähr halbkreisförmig ausgebildet mit gegenüber der Ausnehmung reduziertem Durchmesser. Mit dem Schließen des Kopfes ergänzen sich Schneiden gegenüber liegender Ausnehmungen zu einer ungefähr kreisförmigen Gesamtschneide, über die mit dem Schließen des Kopfes der Zange ein Umfangsschnitt in ein Koaxialkabel eingebracht werden kann. Mittels mehrerer derartiger Schneidelemente mit unterschiedlichen Schnitttiefen können mehrere Umfangsschnitte zur Freilegung einzelner Schichten des Koaxialkabels erzeugt werden. Hierbei entspricht der von einem ersten Schneidelement gebildete Durchmesser der Schneiden dem Durchmesser der Kupferseele des abzuisolierenden Koaxialkabels und der von den Schneiden eines zweiten Schneidelementes gebildete Durchmesser dem Außendurchmesser der die Kupferseele direkt umgebenden Isolierung. Der Durchmesser der Schneiden eines dritten Schneidelementes ist derart gewählt, dass die elektrische Abschirmung des Kabels beim Abisolieren zwar freigelegt, aber nicht durchtrennt wird. Ein multifunktionaler Einsatz der Zange wird dadurch ermöglicht, dass zusätzlich jede Hälfte des Kopfes der Zange eine Backe einer Bridenklemme trägt. Hierdurch kann die Zange auch zum Befestigen eines Steckers, der im Allgemeinen mit Hilfe von Briden mit dem Kabel verbunden wird, eingesetzt werden.

DE 69 22 349 U offenbart eine Vorrichtung zum Abisolieren von Koaxialkabeln, die eine von Hand drehbare Haltevorrichtung besitzt, an der ein in radialer Richtung verstellbares Schneidelement angeordnet ist. Durch Drehen der Haltevorrichtung wird ein vollständiger Schnitt in Umfangsrichtung in das Koaxialkabel eingebracht.

EP 01 40 397 B1 offenbart ein Gerät, welches ausschließlich dem Abisolieren von Koaxialkabeln dient. Hierbei wird das Koaxialkabel in einem Handgriffteil eingeklemmt. Eine komplette Einheit bestehend aus einem Messerträger und einem Führungsbahnglied wird mit Hilfe einer Kurbel in Umfangsrichtung gedreht, so dass in Umfangsrichtung des Koaxialkabels ein Schnitt in dieses eingebracht wird.

Aus weiteren Druckschriften ist es bekannt, dass Werkzeugen eine einzige Funktion zugewiesen ist, nämlich aus DE 20 19 959 A1 und US 4,730,391 B1 und GB 2 288 695 A1 die Funktion des Absisolierens von Kabeln sowie aus US 3,822,470 die Funktion des Schneidens von Koaxialkabeln.

Eine Abisolierzange gemäß DE 44 20 050 C1 ermöglicht einerseits ein Durchtrennen eines Kabels mittels einer Trenneinrichtung, bei der ein festes Trennmesser mit einem festen Handhebel gekoppelt ist, während ein bewegliches Trennmesser starr mit dem verschwenkbaren Handhebel gekoppelt ist, so dass mit der Verschwenkung der Handhebel relativ zueinander die beiden Trennmesser scherenartig ein Kabel durchtrennen können. Darüber hinaus besitzt die Abisolierzange im Bereich des Zangenmauls eine Abisoliereinrichtung. Diese verfügt über Klemmbacken, welche das Kabel in einer im Zangenmaul gebildeten Aufnahme halten sollen. Die Klemmkräfte auf das Kabel sollen hierbei so klein gehalten werden, dass kein Verpressen des Kabels erfolgt. Hierzu sind die Klemmbacken elastisch abgestützt, so dass mit Schließung der Klemmbacken infolge der elastischen Abstützung derselben die Klemmkräfte begrenzt sind. Mit Schließung der Klemmbacken dringt quer zur Längsachse des Kabels eine Schneidkante einer Abisolierklaue einseitig in die Isolierung des Kabels ein. Eine aufwendige Mechanik sorgt dafür, dass mit einer spezifischen Eindringtiefe die Bewegung der Handhebel umgewandelt wird in eine translatorische Relativbewegung der Abisolierklaue mit der Schneidkante und den Klemmbacken auseinander, die zur Folge hat, dass die Isolierung abgerissen und von dem Draht des Kabels heruntergezogen wird.

### AUFGABE DER ERFINDUNG

Der Erfindung liegt die Aufgabe zugrunde, eine multifunktionale Zange für die Bearbeitung eines elektrischen Kabels vorzuschlagen, die hinsichtlich
- der Herstellung,
- der unterschiedlichen funktionellen Einsatzmöglichkeiten,
- des Abisolierverhaltens und/oder
- der Bedienung
verbessert ist.

### LÖSUNG

Die Aufgabe der Erfindung wird erfindungsgemäß mit den Merkmalen des unabhängigen Patentanspruchs 1 gelöst. Weitere Ausgestaltungen der erfindungsgemäßen Zange ergeben sich gemäß den abhängigen Patentansprüchen 2 bis 19.

### BESCHREIBUNG DER ERFINDUNG

Erfindungsgemäß ist die Zange multifunktional ausgebildet, in dem diese mindestens eine über die Handhebel der Zange betätigbare Schneideinrichtung, Verpresseinrichtung und/oder Trenneinrichtung zum glatten Durchtrennen eines Kabels besitzt. Darüber hinaus besitzt die Zange zur Erfüllung einer weiteren Funktion ein weiteres Schneidelement.

Die vorliegende Erfindung beruht auf der Erkenntnis, dass für den Stand der Technik zwar ein Schneidelement vorgesehen ist, dessen radialer Abstand zu einem Kabel veränderbar ist, welches aber in Umfangsrichtung des Kabels im Wesentlichen fest mit dem Abisoliergerät verbunden ist ist. Dies hat zur Folge, dass für das Einbringen eines Umfangsschnittes das Schneidelement - und damit das gesamte Abisoliergerät - um 360° um das Kabel verschwenkt werden muss, was für den Benutzer umständlich ist und in beengten räumlichen Verhältnissen nicht möglich ist.

Den vorgenannten Erkenntnissen trägt die Erfindung dadurch Rechnung, dass das Schneidelement in Umfangsrichtung relativ zu der Zange - und damit zu dem in einer Aufnahme angeordneten Kabel - bewegbar ist. Während des Einbringens des Umfangsschnittes kann die Zange somit ohne Verdrehung gegenüber dem Kabel, aber mit Bewegung des Schneidelementes gehalten werden, woraus eine vereinfachte Bedienung resultiert, die insbesondere in beengten Einbauverhältnissen resultiert.

Eine besondere Ausgestaltung der Erfindung stützt sich auf die Erkenntnis, dass für die aus dem Stand der Technik bekannten Abisoliergeräte das Kabel zwischen Anlageflächen des Abisoliergerätes und dem Schneidelement eingeklemmt werden muss, wobei die Einklemmkraft der radial auf das Schneidelement aufgebrachten Kraft zumindest entspricht. Diese Einklemmkraft hat eine in Umfangsrichtung des Kabels wirkende Reib- oder Schnittkraft zur Folge, die mit der Drehung des Abisoliergerätes um die Längsachse des Kabels dazu führt, dass eine Torsionskraft oder verdrillende Kraft auf das Kabel aufgebracht wird, die unerwünscht ist. Andererseits erfordert die Erzeugung eines Umfangsschnittes zwingend das Auftreten einer Gleitbewegung zwischen der Anlagefläche oder Aufnahme gegenüber dem Kabel.

Entsprechend einem optionalen Zusatzeffekt kann die für die aus dem Stand der Technik bekannten Abisoliergeräte beschriebene Relativbewegung zwischen Aufnahme bzw. Anlageflächen und Kabel dadurch vermieden werden, dass eine Aufnahme für das Kabel nicht drehbar, sondern fest gegenüber der Zange abgestützt ist: Das Schneidelement drückt dann mit einer Radialkraft auf die abzuisolierende Schicht, woraus eine korrespondierende Gegen-Anpresskraft an die Aufnahme resultiert. Mit der Erzeugung des Umfangsschnittes wandert dann die von den Anlageflächen aufgebrachte radial orientierte Gegen-Anlagekraft, so dass diese immer der von dem Schneidelement aufgebrachten Radialkraft entgegengesetzt ist. Eine Gleitbewegung zwischen Anlagefläche und Kabel ist nicht zwingend erforderlich. Entstehen während der Verdrehung des Schneidelementes entlang des Umfangs des Kabels Schnitt- oder Reibkräfte zwischen Schneidelement und Kabel, die in Umfangsrichtung wirken, so können diese in unmittelbarer axialer Nachbarschaft an den Anlageflächen (auf der anderen Seite des Kabels) aufgenommen werden, ohne dass es zu einer nennenswerten Verdrillung des Kabels kommt.

Die Aufnahme kann beliebig gestaltet sein, insbesondere in einer Anlagefläche oder mehreren Anlageflächen bestehen, in einer beliebig konturierten Ausnehmung, einer zylindrischen, konischen, abgestuften Bohrung, oder mehrere radial nach innen hervorstehende Fortsätze oder Rippen aufweisen, um nur einige Gestaltungsmöglichkeiten zu nennen. Hierbei kann die Aufnahme starr sein oder elastisch in radialer Richtung, um ein Einspannen des Kabels zu ermöglichen. Ebenfalls denkbar ist, dass die Aufnahme durch geeignete Stellelemente derart in radialer Richtung verstellbar ist, dass Kontaktflächen von außen zur Anlage an die Mantelfläche des Kabels gebracht werden können. Somit kann die Aufnahme über den gesamten Umfang an dem Kabel anliegen oder lediglich in einem oder mehreren Teilbereichen. Hierbei kann sich ein Kontaktbereich zwischen Aufnahme und Kabel über eine größere Längserstreckung des Kabels erstrecken oder lediglich ein in Längsrichtung lokaler Kontaktpunkt ergeben. Weiterhin kann eine Kontaktfläche in Längsrichtung des Kabels parallel zur Längsachse des Kabels und damit parallel zu einer Mantelfläche verlaufen oder beliebig kurvenförmig ausgebildet sein, so dass die Kontur im Längsschnitt ihren Abstand von einer Längsachse des Kabels verändert. Über eine Aufnahme eines zuvor erläuterten Typs kann das Kabel in der Zange aufgenommen und für die Bearbeitung durch das Schneidelement gehalten werden.

Das Schneidelement aus einem beliebigen Material hinreichender Härte zum Einschneiden der relevanten Schicht des Kabels besitzt eine beliebige Geometrie mit beliebig in Längsrichtung verlaufender und im Querschnitt konturierter Schneide. Beispielsweise ist das Schneidelement kreisscheibenförmig ausgebildet mit kreisförmiger konvexer Schneide, messerartig ungefähr geradlinig oder leicht konvex oder konkav gekrümmt ausgebildet oder die Schneide ist kreisförmig konkav ausgebildet, wobei der Durchmesser der Schneide dem Durchmesser des einzubringenden Umfangsschnittes entsprechen kann.

Der radiale Abstand des Schneidelementes zu der Aufnahme für das Kabel ist veränderbar, wobei mit einer Verringerung des radialen Abstandes das Schneidelement in das in der Aufnahme angeordnete Kabel einschneiden kann. Für eine Erzeugung eines Einschnittes in das Kabel sind grundsätzlich unterschiedliche Mechanismen einsetzbar:
- Entsprechend einer ersten erfindungsgemäßen Ausführungsform kann das Schneidelement ohne Umfangs-Relativbewegung zwischen Aufnahme und Schneidelement zu dem gewünschten radialen Abstand verbracht werden, für den ein Einschnitt erzeugt werden soll. Somit wird mit der Veränderung des radialen Abstandes bereits die volle Schnitttiefe erreicht, allerdings nur in einem Teilumfangsbereich des Kabels. Mit Festlegung des radialen Abstandes zwischen Schneidelement und Kabel kann dann eine Relativbewegung zwischen Schneidelement und Kabel erzeugt werden, wobei mit zunehmender Relativbewegung der Einschnitt mit konstanter Tiefe weiter in Umfangsrichtung fortgeführt wird.
- Für eine weitere Ausführungsform wird das Schneidelement lediglich mit einer definierten Radialkraft in radialer Richtung auf das Kabel zu beaufschlagt, so dass das Schneidelement mit der Radialkraft auf eine Mantelfläche des Kabels gedrückt wird. Diese Radialkraft kann bereits noch zu keinem Einschnitt führen oder zu einem Einschnitt in das Kabel in der gewünschten Tiefe oder in verringerter Tiefe führen. Während der dann aufgebrachten Relativbewegung zwischen Schneidelement und Kabel wird das Schneidelement mit der Anpresskraft gegen die Mantelfläche des Kabels gedrückt, wodurch ein Einschnitt erzeugt werden kann, in Umfangsrichtung fortgesetzt werden kann und/oder eine Tiefe eines Einschnittes vergrößert wird. Hierbei kann es möglich sein, dass zur Freilegung einer Schicht des Kabels eine relative Verdrehung zwischen Kabel und Schneidelement von mehr als 360° erforderlich ist, wobei sich mit zunehmendem Verdrehwinkel die Tiefe des Einschnittes vergrößert.
- Mischformen der zuvor erläuterten Ausführungsformen sind ebenfalls möglich - ist beispielsweise eine Anpresskraft für eine Feder so groß, dass über diese unmittelbar die gewünschte Einschnitttiefe herbeigeführt werden kann, kann auch ohne eine Festlegung des radialen Abstandes zwischen Schneidelement und Kabel eine Verdrehung um 360° in Umfangsrichtung einen Umfangseinschnitt in der gewünschten Tiefe erzeugen. Andererseits kann auch für eine Festlegung des radialen Abstandes zwischen Schneidelement und Kabel eine Relativverdrehung von mehr als 360° erforderlich sein, was insbesondere für eine Schicht aus Aluminium mit einer geringen Schichtdicke der Fall sein kann.

Gemäß einer weiteren Ausgestaltung der erfindungsgemäßen Zange besitzt die Aufnahme eine Zentrierhilfe. Über eine derartige Zentrierhilfe kann die Position des Kabels in der Aufnahme relativ zu der Bewegungsbahn des Schneidelementes zentriert werden. Dies ist von Bedeutung zur Erzeugung eines Umfangseinschnittes, der konzentrisch zur Längsachse des Kabels verläuft. Im einfachsten Fall ist eine derartige Zentrierhilfe durch Kontaktflächen der Aufnahme gebildet, die konisch verlaufen bzw. ihren Abstand voneinander mit zunehmender Eindringtiefe in die Aufnahme verringern. Beispielsweise ist die Aufnahme als Bohrung mit einer kegelförmigen Fase ausgebildet.

Während es grundsätzlich möglich ist, dass für eine Veränderung des radialen Abstandes zwischen Aufnahme und Schneidelement die Aufnahme relativ zu der Zange in Richtung des Schneidelementes bewegt wird, schlägt eine weitere Ausgestaltung der Erfindung vor, dass der radiale Abstand des Schneidelementes von einer Aufnahme für das Kabel durch Bewegung des Schneidelementes gegenüber der Zange herbeiführbar ist.

Eine derartige Bewegung besteht insbesondere in einer translatorischen Bewegung des Schneidelementes in radialer Richtung. Hierbei kann das Schneidelement beispielsweise in geeigneten Führungen, Nuten oder Ausnehmungen translatorisch geführt sein.

Entsprechend einer alternativen Ausgestaltung ist das Schneidwerkzeug verschwenkbar, wobei dieses über eine parallel zur Längsachse des Kabels orientierte Schwenkachse gelagert sein kann.

Um eine unangemessene Tiefe des mit der erfindungsgemäßen Zange erzeugten Umfangseinschnittes zu vermeiden, wird ergänzend vorgeschlagen, dass ein Anschlag vorgesehen ist, über den ein minimaler radialer Abstand des Schneidelementes von der Aufnahme vorgegeben werden kann.

Insbesondere für den Fall, dass das Schneidelement über ein Federelement radial nach außen beaufschlagt ist, kann es vorteilhaft sein, wenn ein Anschlag vorgesehen ist, der einer Vorgabe eines maximalen radialen Abstandes des Schneidelementes von der Aufnahme dient.

Über den Einsatz eines Federelementes, welches das Schneidelement radial nach innen beaufschlagt, kann für ein nicht ergänzend betätigtes Schneidelement dieses gegen eine Mantelfläche des Kabels gepresst werden, wodurch bereits allein oder in Verbindung mit der Bewegung in Umfangsrichtung ein Einschnitt in das Kabel eingebracht oder vertieft werden kann. Hierbei kann die Federkraft allein oder in Ergänzung mit einer zusätzlich oder manuell aufgebrachten Radialkraft für den Einschnitt verantwortlich sein. In einem derartigen Fall kann das Schneidelement entgegen der Federwirkung manuell radial nach außen bewegt werden, um eine Einführstellung für das Kabel in die Aufnahme oder eine Entnahmestellung zu ermöglichen.

Andererseits kann ein Federelement das Schneidelement in radialer Richtung für eine Vergrößerung des Abstandes des Schneidelementes von der Aufnahme beaufschlagen. Dies bedeutet, dass ohne anderweitige Beaufschlagung des Schneidelementes das Schneidelement die Aufnahme freigibt, so dass kraft- und schnittfrei eine Einführstellung oder Entnahmestellung der Zange gegeben ist. Ein Einschneiden des Schneidelementes in das Kabel mit einer Verringerung des radialen Abstandes von der genannten Einführstellung erfordert dann zusätzliche Maßnahmen, beispielsweise die Aufbringung manueller radialer Kräfte auf das Schneidelement.

Gemäß einer weiteren Ausgestaltung der erfindungsgemäßen Zange ist eine Arretierung vorgesehen, über die ein definierter Abstand des Schneidelementes von der Aufnahme in einer Schnittstellung vorgebbar ist. Über die Arretierung kann gewährleistet werden, dass mit der Erzeugung der Umfangsbewegung des Schneidelementes gegenüber der Aufnahme die Schnitttiefe konstant bleibt, so dass ein Umfangsschnitt mit konstanter Tiefe entsteht.

Zur Freilegung einer Schicht in definiertem Abstand von einer Stirnseite des Kabels schlägt die Erfindung vor, eine Positioniereinrichtung vorzusehen, über die ein axialer Abstand des Schneidelementes von der Stirnseite des Kabels vorgebbar ist. Hierbei handelt es sich im einfachsten Fall um einen Vorsprung oder ein Verjüngung der Aufnahme.

Ergänzend schlägt die Erfindung vor, eine Ausschiebeeinrichtung vorzusehen, über die das Kabel oder geschnittene Teilbereiche des Kabels nach Durchführung des Schneidvorganges aus der Zange ausgeschoben werden können. Hierdurch kann beispielsweise eine Notwendigkeit einer anderweitigen aufwändigen Entfernung von abgeschnittenen Resten aus der Aufnahme vermieden werden.

Für den Fall, dass in einem Arbeitsgang, d. h. mit einer radialen Bewegung in Richtung der Aufnahme und/oder einer Bewegung in Umfangsrichtung mehrere Schichten des Kabels mit mehreren Umfangseinschnitten unterschiedlicher Tiefe freigelegt werden sollen, können erfindungsgemäß mehrere axial zueinander versetzte Schneidelemente vorgesehen sein, die in einer gemeinsamen Bewegung relativ zu dem Kabel bewegbar sind.

Die Einsatzmöglichkeiten der erfindungsgemäßen Zange können vervielfältigt werden, wenn diese ein auswechselbares Kopfteil aufweist. Hierbei können unterschiedliche Kopfteile unterschiedliche Arbeitsgänge für die Bearbeitung des elektrischen Kabels betreffen. Beispielsweise kann ein erstes Kopfteil dem Abisolieren des Kabels dienen, während ein zweites Kopfteil dem Verpressen mindestens eines Steckers mit dem Kabel dient. Alternativ oder kumulativ können unterschiedliche Kopfteile für Kabel unterschiedlicher Durchmesser oder Typen vorgesehen sein. Eine Betätigungseinheit kann mit mehreren derartigen Kopfteilen ein Werkzeugset bilden, welches insbesondere in einer Art Koffer oder einer Box aufzubewahren ist.

Ebenfalls möglich ist, dass mindestens eine weitere separat betätigbare Schneideinrichtung an der Zange oder einem Kopfteil vorgesehen ist, wobei die unterschiedlichen Schneideinrichtungen zur Einbringung von Umfangseinschnitten unterschiedlicher Tiefe für dasselbe Kabel oder für unterschiedliche Kabel Einsatz finden können.

Von Vorteil kann es weiterhin sein, wenn entsprechend einem weiteren erfindungsgemäßen Vorschlag eine Trenneinrichtung vorgesehen ist, die über die Handhebel betätigbar ist und mittels welcher ein glattes Durchtrennen eines Kabels möglich ist, beispielsweise zur Vorbereitung einer Stirnseite des Kabels für ein anschließendes Abisolieren.

Weiterhin kann für den Fall, dass über die Zange mit demselben Kopfteil oder einem anderen Kopfteil neben dem Abisolieren des Kabels ein Verpressen erfolgen soll, ein Zwangsgesperre vorgesehen sein, über welches ein Verpressen in mehreren Pressstufen ermöglicht ist.

Grundsätzlich ist der Einsatz der vorliegenden Erfindung in Verbindung mit Zangen beliebigen Typs möglich. Lediglich beispielhaft werden hier Zangen der Anmelderin gemäß den Druckschriften DE 40 23 337 C1, DE 44 27 553 A1, DE 100 56 900 C1, DE 101 32 413 A1, DE 101 40 270 B4, DE 197 13 580 C2, DE 198 02 287 C1, DE 198 32 884 C1 mit den hier offenbarten unterschiedlichen Kinematiken, Verpressbedingungen, Bewegungsformen und Einsätzen genannt.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- Fig. 1: zeigt eine erfindungsgemäße Zange in einer räumlichen Darstellung, wobei ein Zangenkopf in von einer Betätigungseinheit demontiertem Zustand dargestellt ist.
- **Fig. 2**: zeigt einen Zangenkopf in Explosionsdarstellung.
- **Fig. 3**: zeigt eine Schneideinrichtung in einem Längsschnitt III-III.
- **Fig. 4**: zeigt die Schneideinrichtung gemäß Fig. 3 in einem Querschnitt IV-IV.
- **Fig. 5**: zeigt die Schneideinrichtung gemäß Figuren 3 und 4 in einer Explosionsdarstellung.

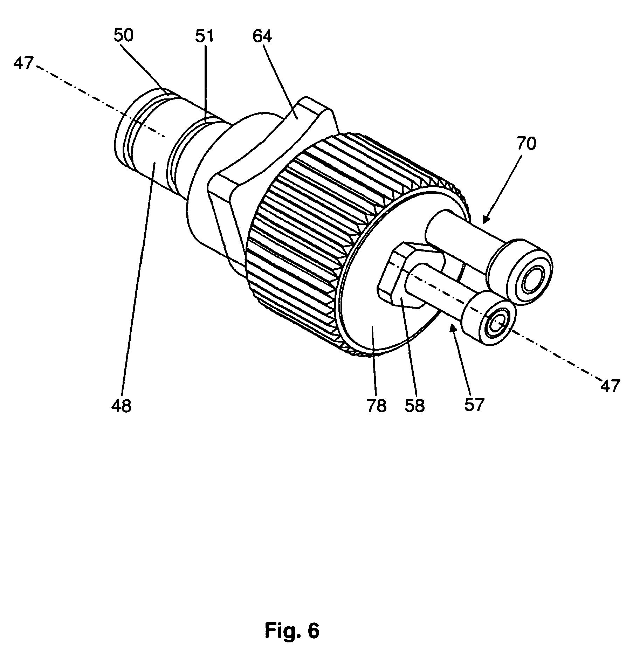

- **Fig. 6**: zeigt die Schneideinrichtung gemäß Figuren 3 bis 5 in einer räumlichen Darstellung.
- **Fig. 7**: zeigt eine alternative Ausgestaltung einer Schneideinrichtung.
- **Fig. 8**: zeigt eine alternative Ausgestaltung einer Schneideinrichtung in einem Querschnitt.

### FIGURENBESCHREIBUNG

In den Figuren dargestellte Ausführungsformen einer Zange sind lediglich beispielhaft für die Art der eingesetzten Zange, die Kinematik zur Erzeugung von Zangenkräften, die Größen- und Abmessungsverhältnisse, die Ausbildung des Schneidelementes, die Anordnung des Schneidelementes an der Zange, den Einsatz und die Art eines verwendeten Zwangsgesperres, Freiheitsgrade einer Zangenbewegung des Kopfteiles, insbesondere für eine Verschwenkung mit den Handhebeln oder eine translatorische Verschiebung nach Maßgabe einer Verschwenkung von Handhebeln, den Aufbau des Kopfteiles und die Ausbildung des Schneidelementes selbst. Beispielsweise kann ein Schneidelement in Zusammenhang mit einem Werkzeug der Anmelderin entsprechend den Druckschriften DE 40 23 337 C1, DE 44 27 553 A1, DE 100 56 900 C1, DE 101 32 413 A1, DE 101 40 270 B4, DE 19713580 C2, DE 198 02 287 C1, DE 198 32 884 C1 der Anmelderin mit den hier beschriebenen Detaillösungen Einsatz finden. Andererseits können für die Schneideinrichtung grundsätzlich Merkmale der in DE 698 31 996 T2, DE 195 43 390 C1, GB 2 215 143 A, DE-OS 1 941 188 und DE 91 04 414 U1 bekannte Ausgestaltungsmerkmale zum Einsatz kommen, beispielsweise Merkmale betreffend die Ausbildung der Schneiden, die Realisierung einer Anpresskraft einer Schneide an ein Kabel und ähnliches.

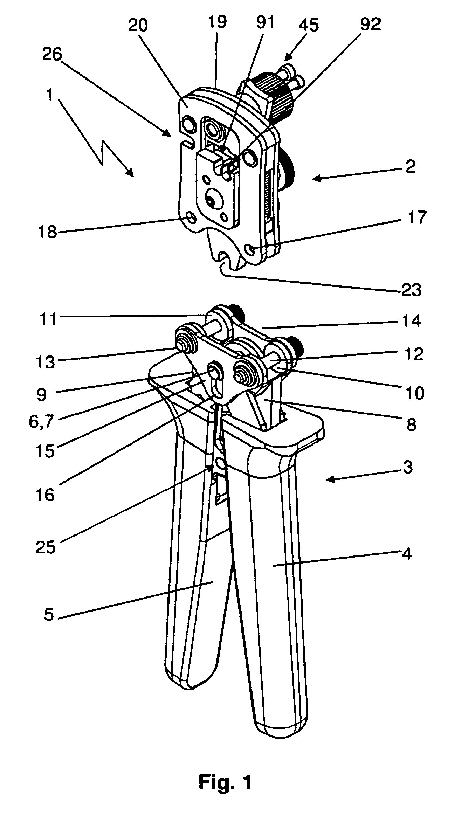

**Fig. 1** zeigt ein Ausführungsbeispiel einer erfindungsgemäßen Zange 1, wobei ein Kopfteil 2 demontiert von einer Betätigungseinheit 3 dargestellt ist.

Die Betätigungseinheit 3 besitzt zwei Handhebel 4, 5, die verschwenkbar zu einer Schwenkachse 6 sind. Hierzu sind überlappende Lageraugen der Endbereiche der Handhebel 4, 5 von einem Druckbolzen 7 durchsetzt. Eine weitere Verbindung der Handhebel 4, 5 miteinander besteht über Zuglaschen 8, 9 mit gabelförmigen Aufnahmen 10, 11, Verbindungsbolzen 12, 13 und plattenförmige Querjoche 14, 15 wie folgt: Die Zuglaschen 8, 9 sind in ihren unteren Endbereichen verschwenkbar um eine Achse, die parallel zur Schwenkachse 6 orientiert ist, gegenüber den Handhebeln 4, 5 gelagert. In den gegenüberliegenden Endbereichen besitzen die Zuglaschen 8, 9 im Bereich der gabelförmigen Aufnahmen 10, 11 Lageraugen, die fluchtend zu entsprechenden Lageraugen der Querjoche 14, 15 angeordnet sind. Die Verbindungsbolzen 12, 13 sind durch die Lageraugen der Aufnahmen 10, 11 sowie der Querjoche 14, 15 hindurch gesteckt und gesichert, beispielsweise durch einen Kopf des Verbindungsbolzens 12, 13 sowie einen gegenüber liegend angeordneten Sprengring. Die Querjoche 14, 15 sind parallel zueinander angeordnet unter Ausbildung eines Zwischenraums, in dem die über die Schwenkachse 6 gegeneinander abgestützten Endbereiche der Handhebel 4, 5 angeordnet ist. Die Querjoche 14, 15 besitzen ein Langloch 16, welches sich in Richtung einer zentralen Längsachse der Zange 1 erstreckt und eine Führung für den Druckbolzen 7 bildet.

Die Verbindungsbolzen 12, 13 liegen in einer gemeinsamen Ebene, die in Fig. 1 horizontal orientiert ist. Eine Verschwenkung der Handhebel 4, 5 aufeinander zu hat zur Folge, dass sich der Abstand des Druckbolzens 7 von der durch die Verbindungsbolzen 12, 13 vorgegebenen Ebene verringert. Zur Sicherung eines einmal erreichten Schwenkwinkels - und damit eines Abstandes des Druckbolzens 7 von der durch die Verbindungsbolzen 12, 13 vorgegebenen Ebene - ist zwischen die Handhebel 4, 5 eine Zwangsgesperre 25 zwischengeschaltet, wie dieses beispielsweise aus den eingangs genannten Druckschriften der Anmelderin im Detail bekannt ist. Ein derartiges Zwangsgesperre 25 ermöglicht eine Aufteilung des gesamten Schwenkwinkels der Handhebel 4, 5 aufeinander zu in mehrere kleine Teil-Schwenkwinkel, wobei eine einmal erreichte Schwenkposition oder - stufe durch das Zwangsgesperre gesichert wird. Eine Lösung des Zwangsgesperres erfolgt automatisiert für das Erreichen eines minimalen Öffnungswinkels der Handhebel 4, 5 oder durch manuelles Einwirken auf das Zwangsgesperre 25.

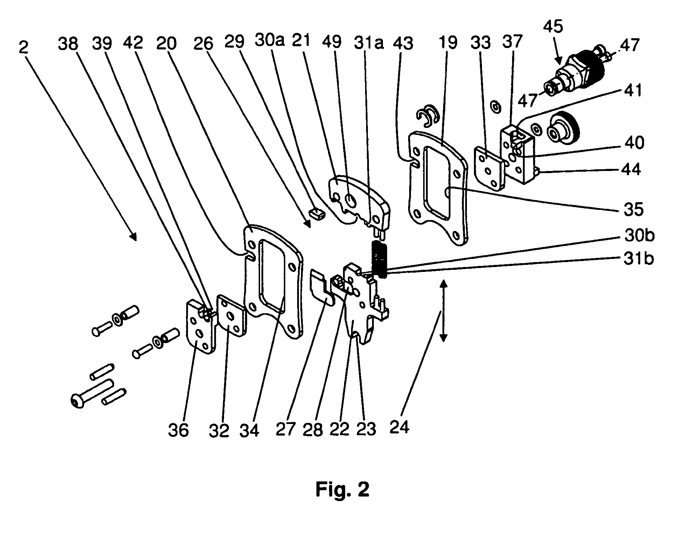

Zur Verbindung des Kopfteiles 2 mit der Betätigungseinheit 3 werden gegenüber Fig. 1 die Verbindungsbolzen 12, 13 aus der Betätigungseinheit 3 zumindest teilweise herausgezogen. Das Kopfteil 2 wird von oben in die Betätigungseinheit 3 eingesetzt, bis Lageraugen 17, 18 von in erster Näherung O-förmigen Rahmen 19, 20 fluchtend zu den entsprechenden Lageraugen des Querjoches 14, 15 und der Aufnahmen 10, 11 der Zuglaschen 8, 9 angeordnet sind. In dieser Position können die Verbindungsbolzen 12, 13 durch die fluchtenden Lageraugen der Aufnahmen 10, 11, der Querjoche 14, 15 und die Lageraugen 17, 18 der Rahmen 19, 20 hindurch gesteckt werden und axial gesichert werden. Das Kopfteil 2 ist mit den beiden Rahmen 19, 20 plattenförmig ausgebildet, wobei die Rahmen 19, 20 im Wesentlichen identisch ausgebildet sind. Wie aus **Fig. 2** ersichtlich ist, sind zwischen den Rahmen 19, 20 zwei Arbeitsbacken 21, 22 angeordnet. Die Arbeitsbacke 21 ist als ortsfeste Arbeitsbacke ausgebildet und beispielsweise durch eine Nietverbindung fest mit den Rahmen 19, 20 verbunden, wodurch gleichzeitig die Rahmen 19, 20 auf Abstand gehalten sind und in paralleler Ausrichtung zueinander fixiert sind. Hingegen ist die Arbeitsbacke 22 in eine Hubrichtung 24 translatorisch verschieblich, die mit der zentralen Längsachse der Zange 1 übereinstimmt. Die bewegliche Arbeitsbacke ragt nach unten aus dem Kopfteil 2 heraus und besitzt eine randoffene, ungefähr U-förmige Ausnehmung 23. Mit dem Einsetzen des Kopfteiles 2 in die Betätigungseinheit 3 tritt der Druckbolzen 7 in die Ausnehmung 23 ein und kommt am Grund der Ausnehmung 23 zur Anlage. Allerdings ist ebenfalls denkbar, dass für die Verbindung zwischen Kopfteil 2 und Betätigungseinheit 3 zunächst der Druckbolzen 7 nicht an dem Grund der Ausnehmung 23 anliegt, sondern vielmehr erst mit einer Verringerung des Öffnungswinkels der Handhebel 4, 5 zur Anlage an den Grund der Ausnehmung 23 kommt. Die Ausnehmung 23 seitlich begrenzende, in Hubrichtung 24 orientierte Fortsätze bilden seitliche Führungen des Druckbolzens 7 in der Ausnehmung 23.

Die Arbeitsbacken 21, 22 sind aufeinander abgestimmt und bilden beispielsweise ein Werkzeug zum Pressen, Schneiden, Crimpen u. dgl. Zwischen die Arbeitsbacken 21, 22 sind in Hubrichtung 24 wirkende Federelemente, hier Druckfedern, zwischengeschaltet, die für gelöstes Zwangsgesperre 25 die Arbeitsbacken 21, 22 voneinander weg bewegen, was für eine Entnahme eines bearbeiteten Werkstückes oder das Einführen eines neuen zu bearbeitenden Werkstückes von Vorteil ist.

Für das in den Figuren 1 und 2 dargestellte Ausführungsbeispiel bilden die Arbeitsbacken 21, 22 folgende Werkzeuge:
- Eine Trenneinrichtung 26 dient einem glatten Durchtrennen eines Kabels. Hierzu ist mit der beweglichen Arbeitsbacke 22 ein Messer 27 fest verbunden. Für das in Fig. 2 dargestellte Ausführungsbeispiel besitzt das Messer 27 eine gerade ausgebildete Schneide und ist in Draufsicht ungefähr L-förmig ausgebildet. Die bewegliche Arbeitsbacke 22 besitzt eine Ausnehmung 28, deren Kontur der Außenkontur des L-förmigen Messers 27 angepasst ist. Das L-förmige Messer 27 kann in die Ausnehmung 28 eingelegt werden. Gegen eine Entnahme des Messers 27 ist dieses in der Ausnehmung 28 gesichert durch den Rahmen 20, der auf dem dem Grund der Ausnehmung 28 gegenüber liegenden Seite an dem Messer 27 anliegt. Die Schneide des Messers 27 ragt nach oben über die bewegliche Arbeitsbacke 22 hervor. Gegenüberliegend zu der Schneide des Messers 27 ist in die ortsfeste Arbeitsbacke 21 ein Schneidamboss 29 eingelegt. Mit dem vollständigen Schließen kommt das Messer 27 zur Anlage an den Schneidamboss 29, wodurch eine vollständige Schnittbewegung zum glatten Durchtrennen erzeugt werden kann. Vorzugsweise ist der Schneidamboss 29 aus einem elastischen Material und/oder einem Material hergestellt, welches weniger hart ist als die Schneide des Messers 27, so dass eine Verformung des Schneidambosses 29 mit dem Schließen der Trenneinrichtung 26 erfolgen kann. Der Schneidamboss 29 kann entsprechend dem Messer 27 in der beweglichen Arbeitsbacke 22 in eine geeignete Ausnehmung der festen Arbeitsbacke 21 eingelegt sein und über die Rahmen 19, 20 gegen einem Herausfallen gesichert sein.
- Die Arbeitsbacken 21, 22 besitzen weiterhin Schneidhälften 30, 31, wobei die Schneidhälften 30a, 31a an der Arbeitsbacke 21 und die Schneidhälften 30b, 31b an der Arbeitsbacke 22 vorgesehen sind. Die Schneidhälften 30a und 30b sowie 31 a und 31b ergänzen sich zu einer Umfangsschneide mit der Schließbewegung der Arbeitsbacken 21, 22, wobei die Umfangsschneide vorzugsweise kreisförmig ausgebildet ist. Hierbei können die Schneidhälften 30 und 31 in geschlossenem Zustand Umfangsschneiden unterschiedlicher Durchmesser ergeben.

Mit der beweglichen Arbeitsbacke 22 verbunden oder verschraubt werden können beidseits Führungsplatten 32, 33, welche mit Ihren Seitenflächen passgenaue Aufnahme finden in Ausnehmungen 34, 35 der Rahmen 19, 20. Während der Bewegung der Arbeitsbacke 22 in Hubrichtung 24 erfolgt eine Führung der Führungsplatten 32, 33 - und damit der Arbeitsbacke 22 - durch die vertikalen parallelen Begrenzungsflächen der Ausnehmungen 34, 35.

Weiterhin können von außen an den Führungsplatten 32, 33 Positionierhilfen 36, 37 angebracht werden:
- Die Positionierhilfe 36 befindet sich auf der Seite des Kopfteiles 2, von der vorzugsweise ein Kabel eingeführt wird. Die Positionierhilfe 36 besitzt U-förmige Ausnehmungen 38, 39, deren Öffnungsweite dem Durchmesser einer mit der Zange im zugeordneten Arbeitsschritt zu durchtrennenden Schicht entspricht. Somit besitzen die Ausnehmungen 38, 39 unterschiedliche Öffnungsweiten. Der Grund der Ausnehmungen 38, 39 entspricht der Teilmantelfläche eines Zylinders, wobei die Längsachse dieses Zylinders fluchtet mit dem Mittelpunkt der Umfangsschneiden, die durch die Schneidhälften 30, 31 gebildet werden. Die Positionierhilfe 36 dient damit vorrangig einer axialen Ausrichtung und Führung des Kabels.
- Die auf der anderen Seite des Kopfteiles 2 angeordnete Positionierhilfe 37 besitzt in Verlängerung der vorgenannten Längsachsen der teilzylindrischen Ausnehmungen 38, 39 Anschläge 40, 41, wobei der Anschlag 40 von einem Fortsatz der Positionierhilfe 37 gebildet ist, der durch die Ausnehmung 35 hindurch ragt bis in einen vorgegebenen Abstand zu den Schneidhälften 31a, 31b, der der abzuisolierenden Länge entspricht. Hingegen ist der Anschlag 41 gegenüber der durch die Außenfläche des Rahmens 19 vorgegebenen Ebene zurückversetzt zu Vorgabe einer größeren Abisolationslänge.

### Eine derart gebildete Zange kann zum Abisolieren wie folgt verwendet werden:

In einem *Arbeitsschritt* wird ein Koaxialkabel für geöffnete Handhebel in die Trenneinrichtung 26 eingelegt. Im Bereich der Trenneinrichtung besitzen die Rahmen 19, 20 seitliche fluchtende U-förmige Ausnehmungen 42, 43. Für geöffnete Handhebel 4, 5 befindet sich das Messer 27 in maximalem Abstand von dem Schneidamboss 29. Ein Kabel kann somit durch die Ausnehmung 42, den Zwischenraum zwischen Messer 27 und Schneidamboss 29 und Ausnehmung 43 eingeführt werden, was durch axiales Hindurchführen oder seitliches Einschieben erfolgen kann. Mit der Schließbewegung nähert sich das Messer 27 an den Schneidamboss 29 an und trennt mit dem vollständigen Schließen der Handhebel 4, 5 das Koaxialkabel vollständig und möglichst glatt durch.

In einem *weiteren Arbeitsschritt* kann das Koaxialkabel zunächst in die größere Ausnehmung 38 der Ausnehmungen 38, 39 von vorne eingeführt werden. Für geöffnete Handhebel kann das Koaxialkabel in axialer Richtung weiter durch den Zwischenraum zwischen den Arbeitsbacken 21 hindurchgeführt werden, bis die Stirnseite des Koaxialkabels an dem Anschlag 41 der Positionierhilfe 37 zur Anlage kommt. Für derart vorgegebene Position des Koaxialkabels können dann die Handhebel 4, 5 geschlossen werden, womit sich die Schneidhälften 31 a, 31 b aneinander annähern, bis diese mit Vervollständigung der Schließbewegung einen Umfangseinschnitt in eine äußere Schicht des Koaxialkabels einbringen. Wird für geschlossene Arbeitsbacken 21, 22 das Koaxialkabel aus der Zange herausgezogen, halten die Schneidhälften 30a, 30b die durchtrennte Schicht zurück, so dass ein abisolierter Endbereich an dem Koaxialkabel verbleibt, dessen Länge durch den Abstand der Schneidhälften 30a, 30b von dem Anschlag 41 vorgegeben ist. Alternativ kann die Zange geöffnet werden, das Koaxialkabel aus der Zange entnommen werden, und die mit dem Umfangsschnitt durchtrennte Schicht kann manuell von dem übrigen Koaxialkabel entfernt werden.

In einem *weiteren, im Wesentlichen entsprechenden Arbeitsschritt* kann anschließend das Koaxialkabel mit einer verbleibenden inneren, freigelegten Schicht in die Ausnehmung 39 eingelegt werden und in axialer Richtung in die Zange eingelegt werden, bis die Stirnseite des Koaxialkabels zur Anlage an den Anschlag 40 kommt. Mit Schließbewegung der Arbeitsbacken 21, 22 wird mittels der Schneidhälften 31a, 31b ein Umfangseinschnitt in die freigelegte Schicht eingebracht, so dass ein weiteres Abisolieren möglich ist. Hierbei wird die Länge der nun freigelegten Schicht vorgegeben durch den Abstand der Schneidhälften 31 a, 31 b von dem Anschlag 40.

Gemäß einem besondern Vorschlag der Erfindung ist die Positionierhilfe 37 als Wendeeinrichtung ausgebildet. Dies bedeutet, dass beispielsweise für unterschiedliche gewünschte Längen der abzuisolierenden Schichten die Positionierhilfe 37 derart gewendet mit der Zange verbindbar ist, dass an Stelle des Anschlages 40 ein Anschlag 44 zur Wirkung kommt.

Erfindungsgemäß ist eine Schneideinrichtung 45 vorgesehen, bei welcher ein Schneidelement 46 oder ein Messer unabhängig von der Schwenkbewegung der Handhebel 4, 5 relativ zu der Zange 1 um eine Längsachse 47-47 verdrehbar ist. Für das dargestellte Ausführungsbeispiel besitzt das Schneidelement 46 einen zylindrischen Fortsatz 48, der mit einer Übergangs- oder Spielpassung durch die Ausnehmungen 34, 35 in eine Durchgangsbohrung 49 der Arbeitsbacke 21 einsetzbar ist. Der zylindrische Fortsatz 48 besitzt zwei Umfangsnuten 50, 51, deren Abstand mit der Dicke der Arbeitsbacke 21 korreliert. In in die Bohrung 49 eingesetztem Zustand ist die Schneideinrichtung 45 in axialer Richtung durch in den Umfangsnuten 50, 51 eingesetzte Sprengringe in beide Richtungen axial gesichert, wobei eine Drehbewegung der Schneideinrichtung 45 gegenüber der Arbeitsbacke 21 um die Längsachse 47-47 möglich ist.

Der Fortsatz 48 ist Teil eines Grundkörpers 52 der Schneideinrichtung 45. Der Grundkörper 52 besitzt eine Längsbohrung, die ungefähr mittig einen Durchmessersprung aufweist, wobei ein Übergang zwischen den unterschiedlichen Durchmessern der Durchgangsbohrung 53 durch eine Zentrierhilfe 54 in Form einer Fase gebildet ist.

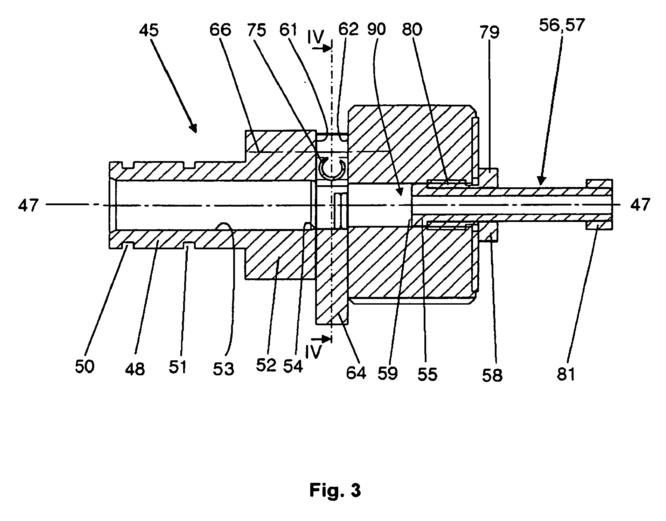

In der Durchgangsbohrung 53 ist mit einem passgenauen zylindrischen Endbereich 55 ein Ausschiebestößel 56 als Teil einer Ausschiebeeinrichtung 57 derart angeordnet, dass sich der Ausschiebestößel 56 in Richtung der Längsachse verschieben lässt. Eine maximal aus der Durchgangsbohrung 53 herausgeschobene Stellung, die in **Fig. 3** ersichtlich ist, ist durch einen Anschlag vorgegeben, der für das dargestellte Ausführungsbeispiel durch eine in den Grundkörper eingeschraubte Abschlussmutter 58 vorgegeben wird. Die unterschiedlichen Durchmesser der Durchgangsbohrung 53 sowie der Öffnungswinkel der Phase 54 sind derart gewählt, dass ein Koaxialkabel nach dem Durchtrennen durch die Trenneinrichtung 26 mit maximalem Außendurchmesser in die Durchgangsbohrung 53 eingeführt werden kann, eine Zentrierung durch die Phase 54 erfolgen kann und mit einem weiteren Einschieben des Koaxialkabels die Stirnseite des Koaxialkabels an einer Stirnseite 59 des Ausschiebestößels 56 zur Anlage kommt. Mit dem maximalen Einschieben des Koaxialkabels in die Durchgangsbohrung 53 drückt die Stirnseite des Koaxialkabels den Ausschiebestößel 56 gegen den von der Abschlussmutter 58 gebildeten Anschlag. Mit der Stirnseite 59, die für die maximal nach außen bewegte Position des Ausschiebestößels 56 den maximalen Einschiebeort für die Stirnseite des Koaxialkabels vorgibt, ist eine Positioniereinrichtung 90 gebildet.

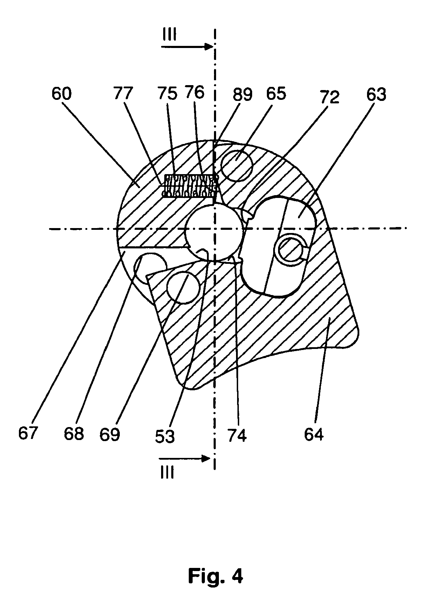

Weiterhin besitzt der Grundkörper unmittelbar benachbart der Phase 54 eine Einfräsung, welche sich über ungefähr drei Viertel des Umfanges erstreckt und bis zur Durchgangsbohrung 53 durchgeht, so dass gemäß **Fig. 4** lediglich ein Kreisringsegment 60 mit einem Umfangswinkel von 90° verbleibt, welches sich bei Orientierung gemäß Fig. 4 ungefähr von einer 9-Uhr-Position bis zu einer 12-Uhr-Position erstreckt.

Abseits des Kreisringsegmentes 60 bildet der Grundkörper 52 mit parallelen Begrenzungswandungen 61, 62 einen Aufnahmeraum für ein Schneidelement 63 mit zugeordneter Halte- und Führungseinheit 64.

Für das dargestellte Ausführungsbeispiel erstreckt sich ein Lagerbolzen 65, der eine Schwenkachse 66 vorgibt, die parallel zur Längsachse 47-47 orientiert ist, in den Zwischenraum zwischen den Begrenzungswandungen 61, 62. Die Halte- und Führungseinheit 64 ist mit einem entsprechenden Lagerauge an dem Lagerbolzen 65 verschwenkbar um die Schwenkachse 66 abgestützt. Weiterhin stützt sich die Halte- und Führungseinheit an den Begrenzungswandungen 61, 62 ab, so dass lediglich ein Verschwenkfreiheitsgrad für die Halte- und Führungseinheit 64 verbleibt.

Die Halte- und Führungseinheit 64 ist in erster Näherung L-förmig, V-förmig oder kreisringsegmentförmig mit einem Umfangswinkel von ca. 270° ausgebildet, wobei die Abstützung über den Lagerbolzen 65 in einem Endbereich der Halte- und Führungseinheit 64 angeordnet ist. Die maximale Verschwenkung der Halte- und Führungseinheit 64 nach innen ist dadurch vorgegeben, dass der dem Lagerbolzen 65 abgewandte Endbereich der Halte- und Führungseinheit 64 zur Anlage kommt an die Begrenzungsfläche des Kreisringsegmentes 60, die damit einen Anschlag 67 zur Vorgabe der maximalen Bewegung der Halte- und Führungseinheit 64 radial nach innen bildet. In dieser Endlage fluchten eine Bohrung 68 des Grundkörpers sowie eine Bohrung 69 in der Halte- und Führungseinheit 64, die in dem dem Lagerbolzen 65 gegenüberliegenden Endbereich der Halte- und Führungseinheit angeordnet ist. Eine Verriegelungseinheit 70, hier ein Verriegelungsstift 71, kann in die Bohrungen 68, 69 eingesteckt oder automatisiert eingeschoben werden, wodurch die Halte- und Führungseinheit 64 in der beschriebenen Endlage verriegelt werden kann.

Die Halte- und Führungseinheit 64 trägt das Schneidelement 63. In dem dargestellten Ausführungsbeispiel ist das Schneidelement 63 mit einer geradlinig orientierten Schneide 72 ausgebildet. Für das dargestellte Ausführungsbeispiel ist das Schneidelement 63 ungefähr O-förmig ausgebildet mit aus der O-förmigen Außenkontur in Richtung der Längsachse 47-47 vorstehender Schneide 72. Die Halte- und Führungseinheit 64 besitzt eine Ausnehmung, deren Kontur der O-förmigen Außenkontur des Schneidelementes 63 entspricht. Mit Einlegen des Schneidelementes 63 in die Ausnehmung der Halte- und Führungseinheit 64 ist die Lage des Schneidelementes 63 gegenüber der Halte- und Führungseinheit bereits vorgegeben. Eine Sicherung des Schneidelementes 63 in Richtung der Längsachse 47-47, also gegenüber einer Entnahme des Schneidelementes 63 aus der Halte- und Führungseinheit 64, erfolgt über ein Befestigungselement 73, beispielsweise eine Schraube, einen Niet oder einen Passstift. Die Halte- und Führungseinheit 64 besitzt eine innere Ausnehmung 74, die derart bemessen ist, dass gewährleistet ist, dass über den gesamten Verschwenkwinkel der Halte- und Führungseinheit 64 diese nicht in den offenen Querschnitt der Durchgangsbohrung 53 eintritt, so dass lediglich die Schneide 72 des Schneidelementes 63 mit einem in der Durchgangsbohrung 53 angeordneten Kabel in Wirkverbindung tritt. Weiterhin ist die Halte- und Führungseinheit 64 in dem dem Lagerbolzen 65 benachbarten Endbereich mit einer Kontur versehen, die derart gestaltet ist, dass die gewünschten Verschwenkwinkel der Halte- und Führungseinheit 64 gegenüber dem Kreisringsegment 60 möglich sind.

Fig. 4 zeigt ein Ausführungsbeispiel, bei dem in einer Bohrung, deren Längsachse 77 in dem dargestellten Querschnitt liegt, eine Druckfeder 75 angeordnet ist, deren einer Endbereich an einer Stirnseite 76 der Halte- und Führungseinheit 64, die dem Lagerbolzen 65 benachbart ist, abgestützt ist. Die Druckfeder 75 ist für sämtliche Schwenkwinkel der Halte- und Führungseinheit 64 vorgespannt. Die Längsachse 77 der Druckfeder 75 besitzt gegenüber der Schwenkachse 66 einen Hebelarm, so dass die Druckfeder 75 ein Schwenkmoment erzeugt. Für das in Fig. 4 dargestellte Ausführungsbeispiel ist das durch die Druckfeder 75 verursachte Verschwenkmoment auf eine Verschwenkung der Halte- und Führungseinheit 64 radial nach außen gerichtet. Dies hat zur Folge, dass für die Bewegung des Schneidelementes 63 radial nach innen manuelle Kräfte auf die Halte- und Führungseinheit 64 aufgebracht werden müssen. Mit Arretierung der Halte- und Führungseinheit 64 verbleibt diese unabhängig von der Kraft der Druckfeder 75 in der radial inneren Endlage. Mit dem Lösen der Arretierung durch die Verriegelungseinheit 70 in Form des Verriegelungsstiftes 71 kann die Druckfeder 75 die Halte- und Führungseinheit 64 radial nach außen bewegen, so dass diese nach außen "schnappt". Für eine maximale Verschwenkung der Halte- und Führungseinheit 64 radial nach außen gemäß Fig. 4 kommt der dem Lagerbolzen 65 benachbarte Endbereich der Halte- und Führungseinheit 64 an einen von dem Kreisringsegment 60 Anschlag 89 zur Anlage.

In Fig. 3 ist zu erkennen, dass auf der dem Fortsatz 48 abgewandten Seite der Schneideinrichtung 45 eine kreisringförmige Abschlussscheibe 78 vorhanden ist. Die Abschlussmutter 58 ist mit einem Kopf 79 sowie einer Buchse 80 mit Außengewinde ausgestattet, die eine durchgehende Innenbohrung besitzen. Das Außengewinde der Buchse 80 ist in ein entsprechendes Innengewinde der Durchgangsbohrung 53 eingeschraubt. Mit dem Einschrauben presst der Kopf 79 die Abschlussscheibe 78 gegen die zugeordnete Stirnseite des Grundkörpers 52. Die Innenbohrung von Kopf 79 und Buchse 80 nimmt gleitend den Ausschiebestößel 56 auf. Zur Ermöglichung der Montage besitzt der Ausschiebestößel 56 in seinem aus dem Grundkörper 52 herausragenden Endbereich eine demontierbare Verdickung 81, die als Betätigungselement dienen kann.

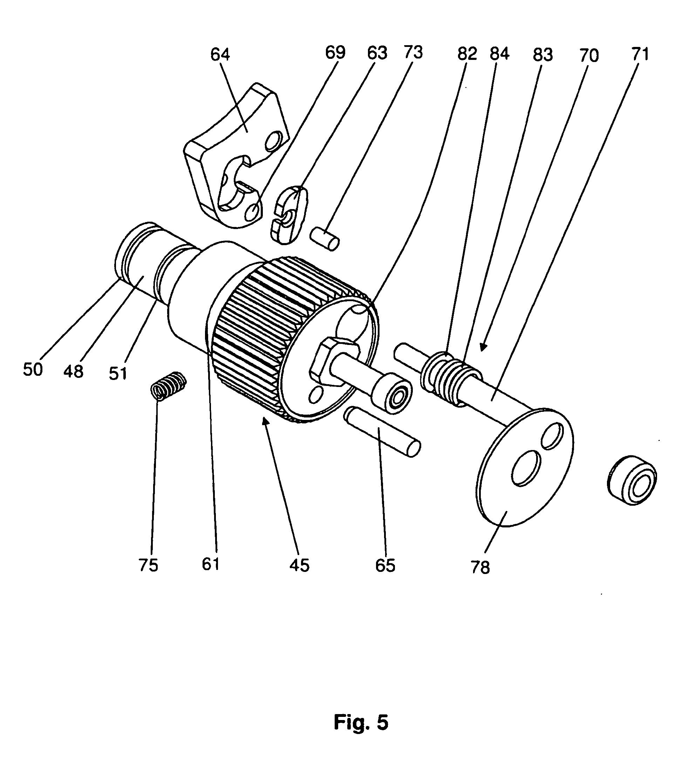

In der Explosionsdarstellung gemäß **Fig. 5** ist die Abschlussmutter 58 in in den Grundkörper 52 eingeschraubtem Zustand dargestellt, obwohl die Abschlussscheibe 78 entfernt von dem Grundkörper dargestellt ist. Der Verriegelungsstift 71 erstreckt sich von dem der Abschlussscheibe 78 zugeordneten Endbereich durch eine Bohrung 82, die bis zu der Begrenzungswandung 62 durchgeht. In der Bohrung 82 ist der Verriegelungsstift 71 parallel zur Längsachse 47-47 verschieblich geführt. Koaxial zum Verriegelungsstift 71 ist eine Verriegelungsfeder 83 angeordnet, die sich in einem Endbereich an der Abschlussscheibe 78 abstützt sowie in dem gegenüber liegenden Endbereich an einem Absatz 84 des Verriegelungsstiftes 71. In montiertem Zustand von Verriegelungsstift 71 und Abschlussscheibe 78 drückt die Verriegelungsfeder 83 den Verriegelungsstift 71 in Richtung der Halte- und Führungseinheit 64, so dass für Erreichen der Endlage mit fluchtenden Bohrungen 68, 69 der Verriegelungsstift 71 automatisiert in die Bohrung 69 der Halte- und Führungseinheit 64 eintritt. Für eine Lösung einer derart gebildeten Verriegelung muss der Verriegelungsstift 71 in seinem aus der Abschlussscheibe 78 herausragenden Endbereich manuell nach außen gezogen werden, so dass sich der Verriegelungsstift 71 aus der Bohrung 69 der Halte- und Führungseinheit 64 herausbewegt wird und die Druckfeder 75 die Halte- und Führungseinheit 64 radial nach außen bewegen bzw. verschwenken kann.

Zusätzlich zu den zuvor erläuterten Arbeitsschritten kann ein weiteres Abisolieren wie folgt durchgeführt werden: Das Koaxialkabel wird in die Schneideinrichtung 45 eingeführt, bis der Ausschiebestößel 56 durch den Kontakt mit der Stirnseite des Koaxialkabels maximal nach außen bewegt ist. Hieran anschließend wird die Halte- und Führungseinheit 64 manuell radial nach innen verschwenkt, bis der Verriegelungsstift 71, veranlasst durch die Verriegelungsfeder 83, in die Bohrung 69 eintritt, so dass die Halte- und Führungseinheit in der radialen Position verriegelt ist. Mit der Verschwenkung der Halte- und Führungseinheit 64 radial nach innen schneidet das Schneidelement 63 bereits in einem Teilumfangsbereich in die Mantelfläche des Koaxialkabels bzw. eine außen liegende Schicht, die bereits zuvor abisoliert worden ist, ein. Ein vollständiger Umfangsschnitt kann erzeugt werden, indem der gesamte Grundkörper im Bereich des Fortsatzes 48 gegenüber der Zange 1 um die Längsachse 47-47 verdreht wird, womit eine Relativbewegung des Grundkörpers 52, der Halte- und Führungseinheit 64 und des Schneidelementes 63 gegenüber dem Koaxialkabel einhergeht. Hierbei kann der Umfangsschnitt erzeugt sein mit einer Drehung um 360°. Alternativ kann eine Drehung um einen vergrößerten Verdrehwinkel erfolgen.

Für den Fall, dass der Grundkörper 52 nicht einstückig ausgebildet ist, sondern vielmehr mit einem ersten Teil ausgestattet ist, welches fest mit der Zange verbunden ist und die Aufnahme für das Koaxialkabel bildet, sowie mit einem zweiten Teil, welches drehbar gegenüber dem ersten Teil um eine Längsachse 47-47 gelagert ist und das Schneidelement 63 trägt, kann eine Verdrillung des Kabels während des Erzeugens des Umfangseinschnittes reduziert oder vermieden werden.

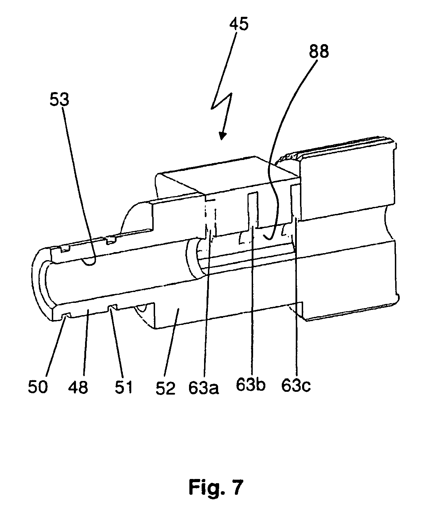

**Fig. 7** zeigt eine abgewandelte Ausführungsform, bei der bei an sich entsprechender Grundkonstruktion nicht lediglich ein Schneidelement in der Schneideinrichtung 45 vorgesehen ist, sondern vielmehr drei axial hintereinander liegende Schneidelemente 63a, 63b und 63c, deren Abstand von der Stirnseite des Koaxialkabels unterschiedlich ist und die unterschiedliche Einschnitttiefen aufweisen, wobei vorzugsweise die Einschnitttiefe des Schneidelements 63c kleiner ist als die Einschnitttiefe des Schneidelementes 63b, die wiederum kleiner ist als die Einschnitttiefe des Schneidelementes 63a.

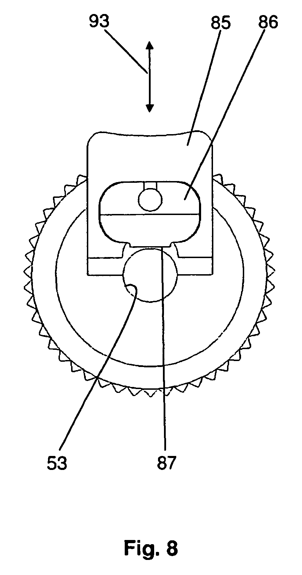

**Fig. 8** zeigt in schematischer Darstellung eine alternative Ausgestaltung einer Halte- und Führungseinheit 85 mit einem Schneidelement 86. In diesem Fall ist die Halte- und Führungseinheit gegenüber dem Grundkörper in der dargestellten Querebene nicht verschwenkbar, sondern in radialer Richtung translatorisch geführt, wobei eine Translationsbewegung ebenfalls unter Beaufschlagung eines Federelementes erfolgen kann.

Auch in diesem Fall trägt die Halte- und Führungseinheit 85 das Schneidelement 86, welches in dem dargestellten Ausführungsbeispiel eine geradlinige Schneide 87 aufweist. Im Zuge einer Hubbewegung 93 kann somit der radiale Abstand des Schneidelementes 86 von einem in die Durchgangsbohrung 53 angeordneten Kabel verändert werden, so dass ein radiales Einschneiden bewirkt werden kann. Mit einer Verdrehung entsprechend dem zuvor erläuterten Ausführungsbeispiel kann dann ein Umfangsschnitt erzeugt werden.

Die Durchgangsbohrung 53 und/oder die Phase 54 bilden eine Aufnahme 88 für das in der Zange angeordnete Kabel, an der das Kabel während des Einbringens des Umfangseinschnittes zur Anlage kommt.

Die erfindungsgemäße Schneideinrichtung 45 kann an beliebiger Stelle der Zange 1 angeordnet sein. Möglich ist beispielsweise auch, dass eine Schneideinrichtung 45 drehbar bei koaxialer Ausrichtung in einem Endbereich eines Handhebels 4, 5 angeordnet ist.

Mit den Arbeitsbacken 21, 22 und den Schneidhälften 30, 31 sind weitere Schneideinrichtungen 91, 92 zusätzlich zu der Schneideinrichtung 45 gebildet.

Die erfindungsgemäße Zange 1 kann mit unterschiedlichen Kopfteilen 2, aber gleicher Betätigungseinheit 3 betrieben werden. Hierbei können die unterschiedlichen Kopfteile an unterschiedliche Anforderungen für ein Abisolieren ein und desselben Kabels ausgerüstet sein. Weiterhin ist es möglich, dass an einem Kopfteil unterschiedliche Trenneinrichtungen 26 und/oder Schneideinrichtung 45, 91, 92 für unterschiedliche Kabel vorgesehen sind. Ebenfalls denkbar ist, dass ein erstes Kopfteil eingesetzt wird, um einige Abisolierschritte vorzunehmen, während weitere Abisolierschritte mit einem weiteren Kopfteil vorgenommen werden. Ebenfalls möglich ist, dass ein spezielles Kopfteil für ein Abisolieren ausgebildet ist, während ein weiteres Kopfteil für ein Verklemmen eines Steckers mit einem mit dem zuvor eingesetzten Kopfteil abisolierten Koaxialkabel eingesetzt wird. Mischformen sind ebenfalls möglich - beispielsweise kann ein Kopfteil sowohl eine Trenneinrichtung 26 als auch eine Schneideinrichtung 45, 91, 92 als auch eine Einrichtung zum Verpressen aufweisen. Vorrichtungen zum Verpressen sind beispielsweise in den eingangs aufgeführten Druckschriften der Anmelderin im Detail beschrieben.

Vorzusgweise wird in zeitlicher Abfolge zunächst die Trenneinrichtung 26 betätigt, dann wird die Schneideinrichtung 45 genutzt sowie hieran anschließend die Schneideinrichtungen 91, 92.

### BEZUGSZEICHENLISTE

- 1: Zange
- 2: Kopfteil
- 3: Betätigungseinheit
- 4: Handhebel
- 5: Handhebel
- 6: Schwenkachse
- 7: Druckbolzen
- 8: Zuglasche
- 9: Zuglasche
- 10: gabelförmige Aufnahme
- 11: gabelförmige Aufnahme
- 12: Verbindungsbolzen
- 13: Verbindungsbolzen
- 14: Querjoch
- 15: Querjoch
- 16: Langloch
- 17: Lagerauge
- 18: Lagerauge
- 19: Rahmen
- 20: Rahmen
- 21: Arbeitsbacke
- 22: Arbeitsbacke
- 23: Ausnehmung
- 24: Hubrichtung
- 25: Zwangsgesperre
- 26: Trenneinrichtung
- 27: Messer
- 28: Ausnehmung
- 29: Schneidamboss
- 30: Schneidhälfte

- 31: Schneidhälfte
- 32: Führungsplatte
- 33: Führungsplatte
- 34: Ausnehmung
- 35: Ausnehmung
- 36: Positionierhilfe
- 37: Positionierhilfe
- 38: Ausnehmung
- 39: Ausnehmung
- 40: Anschlag
- 41: Anschlag
- 42: Ausnehmung
- 43: Ausnehmung
- 44: Anschlag
- 45: Schneideinrichtung
- 46: Schneidelement
- 47: Längsachse
- 48: Fortsatz
- 49: Durchgangsbohrung
- 50: Umfangsnut
- 51: Umfangsnut
- 52: Grundkörper
- 53: Durchgangsbohrung
- 54: Fase
- 55: Endbereich
- 56: Ausschiebestößel
- 57: Ausschiebeeinrichtung
- 58: Abschlussmutter
- 59: Stirnseite
- 60: Kreisringsegment

- 61: Begrenzungswandung
- 62: Begrenzungswandung
- 63: Schneidelement
- 64: Halte- und Führungseinheit
- 65: Lagerbolzen
- 66: Schwenkachse
- 67: Anschlag
- 68: Bohrung
- 69: Bohrung
- 70: Verriegelungseinheit
- 71: Verriegelungsstift
- 72: Schneide
- 73: Befestigungselement
- 74: Ausnehmung
- 75: Druckfeder
- 76: Stirnseite
- 77: Längsachse
- 78: Abschlussscheibe
- 79: Kopf
- 80: Buchse
- 81: Verdickung
- 82: Bohrung
- 83: Verriegelungsfeder
- 84: Absatz
- 85: Halte- und Führungseinheit
- 86: Schneidelement
- 87: Schneide
- 88: Aufnahme
- 89: Anschlag
- 90: Positioniereinrichtung
- 91: Schneideinrichtung
- 92: Schneideinrichtung
- 93: Hubrichtung

## Patentansprüche

1. Zange (1) für die Bearbeitung eines elektrischen Kabels mit einem rundem Querschnitt oder einem runden Teilquerschnitt, insbesondere zur Bearbeitung eines Koaxialkabels, wobei
a) an einem Zangenkopf mindestens eine über die Handhebel (4, 5) der Zange (1) betätigbare
aa) Schneideinrichtung (91, 92),
ab) Verpresseinrichtung und/oder
ac) Trenneinrichtung (26) zum glatten Durchtrennen eines Kabels vorgesehen ist/sind und
b) die Zange an dem Zangenkopf ein weiteres Schneidelement (63; 86) besitzt, dessen radialer Abstand zu einer Aufnahme (88) für das Kabel veränderbar ist und welches unabhängig von der Betätigung der Handhebel (4, 5) in Umfangsrichtung relativ zu der Aufnahme (88) bewegbar ist.

2. Zange (1) nach Anspruch 1, **dadurch gekennzeichnet, dass** die Aufnahme (88) eine Zentrierhilfe aufweist.

3. Zange (1) nach Anspruch 1 oder 2, **dadurch gekennzeichnet, dass** der radiale Abstand des Schneidelementes (63) von der Aufnahme (88) für das Kabel durch Bewegung des Schneidelementes (63) gegenüber der Aufnahme (88) und der Zange (1) herbeiführbar ist.

4. Zange (1) nach Anspruch 3, **dadurch gekennzeichnet, dass** das Schneidelement (63) translatorisch in radiale Richtung bewegbar ist.

5. Zange (1) nach Anspruch 3, **dadurch gekennzeichnet, dass** das Schneidelement (63) verschwenkbar ist.

6. Zange (1) nach einem der vorhergehenden Ansprüche, **dadurch gekennzeichnet, dass** ein Anschlag (67) vorgesehen ist zur Vorgabe eines minimalen radialen Abstandes des Schneidelementes (63) von der Aufnahme (88).

7. Zange (1) nach einem der vorhergehenden Ansprüche, **dadurch gekennzeichnet, dass** ein Anschlag (89) vorgesehen ist zur Vorgabe eines maximalen radialen Abstandes des Schneidelementes (63) von der Aufnahme (88).

8. Zange (1) nach einem der vorhergehenden Ansprüche, **dadurch gekennzeichnet, dass** ein Federelement vorgesehen ist, welches das Schneidelement (63) in radialer Richtung zu einer Verringerung des Abstandes des Schneidelementes (63) von der Aufnahme (88) beaufschlagt.

9. Zange (1) nach einem der Ansprüche 1 bis 7, **dadurch gekennzeichnet, dass** ein Federelement (75) vorgesehen ist, welches das Schneidelement (63) in radialer Richtung zu einer Vergrößerung des Abstandes des Schneidelementes (63) von der Aufnahme (88) beaufschlagt.

10. Zange (1) nach einem der vorhergehenden Ansprüche, **dadurch gekennzeichnet, dass** eine Arretierung oder Verriegelungseinheit (70) zur Vorgabe eines definierten Abstandes des Schneidelementes (63) von der Aufnahm e (88) in einer Schnittstellung vorgesehen ist.

11. Zange (1) nach Anspruch 10, **dadurch gekennzeichnet, dass**
a) in einer Einführstellung des Schneidelementes (63) mit maximalem Abstand des Schneidelementes (63) von der Aufnahme (88) das Schneidelement (63) durch das Federelement (75) radial nach außen beaufschlagt ist,
b) das Schneidelement (63) manuell unter Erhöhung der Federkraft in dem Federelement (75) in eine Schnittstellung mit minimalem Abstand des Schneidelementes (63) von der Aufnahme (88) bewegbar ist,
c) in der Schnittstellung das Schneidelement (63) zur Festlegung des Abstandes des Schneidelementes (63) von der Aufnahme (88) durch die Arretierung oder Verriegelungsein heit (70) festlegbar ist.

12. Zange (1) nach einem der vorhergehenden Ansprüche, **dadurch gekennzeichnet, dass** eine Positioniereinrichtung (90) vorgesehen ist, über die ein axialer Abstand des Schneidelementes (63) von einer Stirnseite des Kabels vorgebbar ist.

13. Zange (1) nach einem der vorhergehenden Ansprüche, **dadurch gekennzeichnet, dass** eine Ausschiebeeinrichtung (57) vorgesehen ist, über die das Kabel und/oder geschnittene Teilbereiche des Kabels nach Durchführung des Schneidvorganges aus der Zange (1) ausgeschoben werden kann/können.

14. Zange (1) nach einem der vorhergehenden Ansprüche, **dadurch gekennzeichnet, dass** mehrere axial zueinander versetzte Schneidelemente (63a, 63b, 63c) vorgesehen sind, die in einer gemeinsamen Bewegung relativ zu einem Kopfteil (2) der Zange (1) bewegbar sind.

15. Zange (1) nach einem der vorhergehenden Ansprüche, **dadurch gekennzeichnet, dass** ein auswechselbares Kopfteil (2) vorgesehen ist.

16. Zange (1) nach einem der vorhergehenden Ansprüche, dadurch gekennzeichn et, dass
a) ein erstes Kopfteil (2) m it
aa) mindestens einem Schneidelement (63) zur Bildung einer Zange (1) sowie
ab) mindestens einer, über die Handhebel (4, 5) der Zange (1) betätigbaren Schneideinrichtung (91, 92) und
b) ein zweites Kopfteil mit einer über die Handhebel (4, 5) der Zange (1) betätigbaren Verpresseinrichtung
vorgesehen sind.

17. Zange (1) nach Anspruch 16, **dadurch gekennzeichnet, dass** das erste Kopfteil eine über die Handhebel (4, 5) der Zange (1) betätigbare Trenneinrichtung (26) zum glatten Durchtrennen eines Kabels besitzt.

18. Zange (1) nach einem der vorhergehenden Ansprüche, **dadurch gekennzeichnet, dass** die Zange (1) ein Zwangsgesperre (25) aufweist.

19. Zange (1) nach einem der vorhergehenden Ansprüche, **dadurch gekennzeichnet, dass** ein Kopfteil (2) der Zange (1) mindestens eine Schneideinrichtung (91, 92) sowie mindestens eine Verpresseinrichtung aufweist.

## Claims

1. Pliers (1) for processing an electrical cable having a circular cross section or a semicircular partial cross section, in particular pliers (1) for processing a coaxial cable, wherein
a) at a pliers head at least one
aa) cutting device (91, 92)
ab) crimping device and/or
ac) severing device (26) for evenly, planar or smooth severing a cable is/are provided which is/are actuated via the hand levers (4, 5) of the pliers (1) and
b) the pliers comprise another cutting element (63; 86) at the pliers head having a variable radial distance from a nest (88) for the cable and being movable relative to the nest (88) independent of the actuation of the hand levers (4, 5) in circumferential direction.

2. Pliers (1) according to claim 1, wherein the nest (88) comprises a centering aid.

3. Pliers (1) according to claim 1 or 2, wherein the radial distance of the cutting element (63) from the nest (88) for the cable is achievable by a movement of the cutting element (63) relativ to the nest (88) and to the pliers (1).

4. Pliers (1) according to claim 3, wherein the cutting element (63) is movable along a tranlational degree of freedom in radial direction.

5. Pliers (1) according to claim 3, wherein the cutting element (63) is pivotable.

6. Pliers (1) according to one of claims 1 to 5, wherein an abutting means (67) is provided for providing or limiting a minimal radial distance of the cutting element (63) from the nest (88).

7. Pliers (1) according to one of claims 1 to 6, wherein an abutting means (89) is provided for providing or limiting a maximal radial distance of the cutting element (63) from the nest (88).

8. Pliers (1) according to one of claims 1 to 7, wherein a spring element is provided biasing the cutting element (63) in radial direction for decreasing the distance of the cutting element (63) from the nest (88).

9. Pliers (1) according to one of claims 1 to 7, wherein a spring element (75) is provided biasing the cutting element (63) in radial direction for increasing the distance of the cutting element (63) from the nest (88).

10. Pliers (1) according to one of claims 1 to 9, wherein a latching, resting or locking unit (70) is provided for providing or limiting a defined distance of the cutting element (63) from the nest (88) in a cutting position.

11. Pliers (1) according to claim 10, wherein
a) in an insertion or introducing position of the cutting element (63) with maximal distance of the cutting element (63) from the nest (88) the cutting element (63) is biased by the spring element (75) in radial outer direction,
b) the cutting element (63) is manually movable with an increase of the spring force of the spring element (75) into a cutting position with a minimal distance of the cutting element (63) from the nest (88),
c) in the cutting position the cutting element (63) is fixable by the latching, resting or locking unit (70) for fixing the distance of the cutting element (63) from the nest (88).

12. Pliers (1) according to one of claims 1 to 11, wherein a positioning unit (90) is provided for providing or limiting an axial distance of the cutting element (63) from a front face of the cable.

13. Pliers (1) according to one of claims 1 to 12, wherein a discharge unit (57) is provided for discharging the cable and/or cut or severed partial regions of the cable from the pliers (1) after finishing the cutting process.

14. Pliers (1) according to one of claims 1 to 13, wherein a plurality of cutting elements (63a, 63b, 63c) being axially spaced is provided, wherein the plurality of cutting elements (63a, 63b, 63c) is movable relatively to a pliers head (2) of the pliers (1) with a common movement.

15. Pliers (1) according to one of claims1 to 14, wherein an exchangeable head part (2) is provided.

16. Pliers (1) according to one of claims 1 to 15, wherein
a) a first head part (2) with
aa) at least one cutting element (63) for building pliers (1) as well as
ab) at least one cutting unit (91, 92) actuated via the hand levers (4, 5) of the pliers (1) and
b) a second head part with a crimping device actuated by the hand levers (4, 5) of the pliers (1)
are provided.

17. Pliers (1) according to claim 16, wherein the first head part comprises a severing device (26) actuated by the hand levers (4, 5) of the pliers (1) for a evenly, planar or smooth severing of the cable.

18. Pliers (1) according to one of claims 1 to 17, wherein the pliers (1) comprise a forced locking mechanism (25).

19. Pliers (1) according to one of claims 1 to 18, wherein a head part (2) of the pliers (1) comprises at least one cutting device (91, 92) and at least one crimping device.

## Revendications

1. Pince (1) pour le traitement d'un câble électrique ayant une section ronde ou une section partielle ronde, en particulier destinée à traiter un câble coaxial, dans laquelle :
a) il est prévu sur une tête de la pince au moins :
aa) un dispositif de coupe (91, 92),
ab) un dispositif de pressage, et/ou
ac) un dispositif de séparation (26) en vue de la séparation lisse d'un câble,
qui peut être actionné par l'intermédiaire des leviers à main (4, 5) de la pince (1), et
b) la pince possède au niveau de la tête de la pince un élément de coupe (63 ; 86) supplémentaire, dont l'écartement radial jusqu'à un logement (88) pour le câble peut être modifié et qui peut être déplacé dans la direction de la circonférence par rapport au logement (88) indépendamment de l'actionnement des leviers à main (4, 5).

2. Pince (1) selon la revendication 1, **caractérisée en ce que** le logement (88) présente une aide au centrage.

3. Pince (1) selon la revendication 1 ou 2, **caractérisée en ce que** l'écartement radial de l'élément de coupe (63) avec le logement (88) pour le câble peut être raccourci en déplaçant l'élément de coupe (63) par rapport au logement (88) et à la pince (1).

4. Pince (1) selon la revendication 3, **caractérisée en ce que** l'élément de coupe (63) peut être déplacé par translation dans la direction radiale.

5. Pince (1) selon la revendication 3, **caractérisée en ce que** l'élément de coupe (63) peut pivoter.

6. Pince (1) selon l'une des revendications précédentes, **caractérisée en ce qu'**il est prévu une butée (67) destinée à définir un écartement radial minimal de l'élément de coupe (63) avec le logement (88).

7. Pince (1) selon l'une des revendications précédentes, **caractérisée en ce qu'**il est prévu une butée (89) destinée à définir un écartement radial maximal de l'élément de coupe (63) avec le logement (88).

8. Pince (1) selon l'une des revendications précédentes, **caractérisée en ce qu'**il est prévu un élément de ressort, qui agit sur l'élément de coupe (63) dans la direction radiale de façon à diminuer l'écartement de l'élément de coupe (63) avec le logement (88).

9. Pince (1) selon l'une des revendications 1 à 7, **caractérisée en ce qu'**il est prévu un élément de ressort (75), qui agit sur l'élément de coupe (63) dans la direction radiale de façon à augmenter l'écartement de l'élément de coupe (63) avec le logement (88).

10. Pince (1) selon l'une des revendications précédentes, **caractérisée en ce qu'**il est prévu un arrêt ou une unité de verrouillage (70) servant à définir un écartement déterminé de l'élément de coupe (63) avec le logement (88) dans une position de coupe.

11. Pince (1) selon la revendication 10, **caractérisée en ce que** :
a) dans une position d'introduction de l'élément de coupe (63) ayant un écartement maximal de l'élément de coupe (63) avec le logement (88), l'élément de ressort (75) agit sur l'élément de coupe (63) dans la direction radiale vers l'extérieur,
b) l'élément de coupe (63) peut être déplacé manuellement, en augmentant la force de ressort dans l'élément de ressort (75), dans une position de coupe ayant un écartement minimal de l'élément de coupe (63) avec le logement (88),
c) dans la position de coupe, l'élément de coupe (63) peut être immobilisé au moyen de l'arrêt ou de l'unité de verrouillage (70) afin de définir un écartement fixe de l'élément de coupe (63) avec le logement (88).

12. Pince (1) selon l'une des revendications précédentes, **caractérisée en ce qu'**il est prévu un dispositif de positionnement (90), au moyen duquel un écartement axial de l'élément de coupe (63) avec un côté frontal du câble peut être déterminé.

13. Pince (1) selon l'une des revendications précédentes, **caractérisée en ce qu'**il est prévu un dispositif de refoulement (57), au moyen duquel le câble et/ou des sections partielles coupées du câble peut être chassé/peuvent être chassées de la pince (1) après la réalisation de l'opération de coupe.

14. Pince (1) selon l'une des revendications précédentes, **caractérisée en ce qu'**il est prévu plusieurs éléments de coupe (63a, 63b, 63c) décalés de façon axiale les uns par rapport aux autres, lesquels peuvent être déplacés dans un déplacement commun par rapport à une partie de tête (2) de la pince (1).

15. Pince (1) selon l'une des revendications précédentes, **caractérisée en ce qu'**il est prévu une partie de tête (2) interchangeable.

16. Pince (1) selon l'une des revendications précédentes, **caractérisée en ce qu'**il est prévu :
a) une première partie de tête (2) ayant :
aa) au moins un élément de coupe (63) permettant de former une pince (1), et
ab) au moins un dispositif de coupe (91, 92) pouvant être actionné au moyen des leviers à main (4, 5) de la pince (1), et
b) une deuxième partie de tête ayant un dispositif de pressage pouvant être actionné au moyen des leviers à main (4, 5) de la pince (1).

17. Pince (1) selon la revendication 16, **caractérisée en ce que** la première partie de tête possède un dispositif de séparation (26) pouvant être actionné au moyen des leviers à main (4, 5) de la pince (1) en vue de la séparation lisse d'un câble.

18. Pince (1) selon l'une des revendications précédentes, **caractérisée en ce que** la pince (1) présente un dispositif de blocage par force (25).

19. Pince (1) selon l'une des revendications précédentes, **caractérisée en ce qu'**une partie de tête (2) de la pince (1) présente au moins un dispositif de coupe (91, 92) et au moins un dispositif de pressage.
